# FASCICULE DE BREVET EUROPEEN

(11) **EP 2 523 907 B1**
(45) Date de publication et mention de la délivrance du brevet: **27.11.2013**
(21) Numéro de dépôt: 11700821.9
(22) Date de dépôt: 10.01.2011
(51) Int. Cl.: C01G 25/00, B01D 53/94, B01J 21/06, B01J 23/10, C01G 25/02, B01D 53/00, C01F 17/00

(54) **COMPOSITION A BASE D'OXYDES DE ZIRCONIUM, DE CERIUM ET D'UNE AUTRE TERRE RARE A TEMPERATURE MAXIMALE DE REDUCTIBILITE REDUITE, PROCEDE DE PREPARATION ET UTILISATION DANS LE DOMAINE DE LA CATALYSE**
ZUSAMMENSETZUNG MIT OXIDEN AUS ZIRKONIUM, CERIUM UND ANDEREN SELTENEN ERDEN MIT REDUZIERTER MAXIMAL REDUZIERBARER TEMPERATUR SOWIE VERFAHREN ZU IHRER HERSTELLUNG UND VERWENDUNG FÜR KATALYSEVORGÄNGE
COMPOSITION CONTAINING OXIDES OF ZIRCONIUM, CERIUM AND ANOTHER RARE EARTH HAVING REDUCED MAXIMAL REDUCIBILITY TEMPERATURE, AND METHOD FOR PREPARING AND USING SAME IN THE FIELD OF CATALYSIS

(30) Priorité: 11.01.2010 FR 1000087
(43) Date de publication de la demande: 21.11.2012
(73) Titulaire: Rhodia Operations, 93300 Aubervilliers (FR)
(72) Inventeur: IFRAH, Simon, F-17140 Lagord (FR); ROHART, Emmanuel, 80000 Amiens (FR); HERNANDEZ, Julien, F-92160 Antony (FR); DENAIRE, Stéphane, F-95280 Jouy le Moutier (FR)
(74) Mandataire: Dubruc, Philippe
(86) Numéro de dépôt international: PCT/EP2011/050206
(87) Numéro de publication internationale: WO 2011/083157

(56) Documents cités:
- EP-A1- 1 870 378
- WO-A1-03/020643
- WO-A2-2009/130202
- FR-A1- 2 736 343
- FR-A1- 2 852 591

## Description

La présente invention concerne une composition à base d'oxydes de zirconium, de cérium et d'au moins une terre rare autre que le cérium, à température maximale de réductibilité élevée, son procédé de préparation et son utilisation dans le domaine de la catalyse.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction notamment des oxydes d'azote également présents dans ces gaz (catalyseurs "trois voies"). Les produits à base d'oxyde de zirconium, d'oxyde de cérium et d'un ou plusieurs oxydes d'autres terres rares apparaissent aujourd'hui comme des constituants particulièrement importants et intéressants rentrant dans la composition de ce type de catalyseurs. Pour être efficaces, ces constituants doivent présenter une surface spécifique importante même après avoir été soumis à des températures élevées, par exemple d'au moins 900°C.

Une autre qualité requise pour ces constituants de catalyseurs est la réductibilité. On entend par réductibilité, ici et pour le reste de la description, la capacité du catalyseur à se réduire en atmosphère réductrice et à se réoxyder en atmosphère oxydante. Cette réductibilité et, par conséquent, l'efficacité du catalyseur, sont maximales à une température qui est actuellement assez élevée pour les catalyseurs à base des produits précités. Ainsi, cette température est généralement de l'ordre de 550°C. Or, il existe un besoin en catalyseurs pour lesquels cette température soit abaissée et donc en catalyseurs dont les performances soient suffisantes, dans des gammes de températures plus faibles.

Or, dans l'état actuel de la technique, il apparaît que ces deux caractéristiques sont souvent difficiles à concilier, c'est à dire qu'une réductibilité élevée à plus basse température a pour contrepartie une surface spécifique plutôt faible.

L'objet de l'invention est de fournir une composition de ce type qui présente en combinaison une surface spécifique élevée et une réductibilité maximale à température plus basse.

Dans ce but, la composition de l'invention est à base d'oxydes de zirconium, de cérium et d'au moins une terre rare autre que le cérium avec une teneur en oxyde de cérium d'au plus 50% en masse et elle est caractérisée en ce qu'elle présente après calcination à 1000°C, 6 heures, une température maximale de réductibilité d'au plus 500°C et une surface spécifique d'au moins 45 m²/g.

D'autres caractéristiques, détails et avantages de l'invention apparaîtront encore plus complètement à la lecture de la description qui va suivre faite en référence aux dessins annexés et dans lesquels :
- la figure 1 est un schéma d'un réacteur utilisé pour la mise en oeuvre du procédé de préparation de la composition de l'invention;
- la figure 2 représente les courbes obtenues par une mesure de réductibilité par réduction programmée en température d'une composition selon l'invention et d'un produit comparatif.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

Pour la présente description on entend par terre rare les éléments du groupe constitué par l'yttrium et les éléments de la classification périodique de numéro atomique compris inclusivement entre 57 et 71.

En outre, les calcinations pour une température et une durée données correspondent, sauf indication contraire, à des calcinations sous air à un palier de température sur la durée indiquée.

Les teneurs sont données en masse d'oxyde sauf indication contraire. L'oxyde de cérium est sous forme d'oxyde cérique, les oxydes des autres terres rares sous forme Ln₂O₃, Ln désignant la terre rare, à l'exception du praséodyme exprimé sous la forme Pr₆O₁₁.

On précise pour la suite de la description que, sauf indication contraire, dans les fourchettes de valeurs qui sont données, les valeurs aux bornes sont incluses.

Les compositions selon l'invention se caractérisent tout d'abord par la nature de leurs constituants.

Les compositions de l'invention sont du type oxydes mixtes, à base d'oxyde de zirconium et qui comprennent en outre de l'oxyde de cérium et un oxyde d'au moins une terre rare autre que le cérium. Pour la suite de la description on doit comprendre que, si par souci de simplification on ne mentionne qu'une terre rare, il est bien entendu que l'invention s'applique au cas où les compositions comprennent plusieurs terres rares, notamment deux.

La terre rare autre que le cérium peut être plus particulièrement choisi parmi l'yttrium, le lanthane, le néodyme, le praséodyme ou le gadolinium. On peut citer plus particulièrement les compositions à base d'oxydes de zirconium, de cérium, de praséodyme et de lanthane, celles à base d'oxydes de zirconium, de cérium, de néodyme et de lanthane, celles à base d'oxydes de zirconium, de cérium, de lanthane et de gadolinium et celles à base d'oxydes de zirconium, de cérium, de lanthane et d'yttrium.

La teneur en oxyde de cérium est d'au plus 50%, plus particulièrement d'au plus 40%. Elle est de préférence d'au moins 10%, plus particulièrement d'au moins 15% et encore plus particulièrement d'au moins 20%. Elle peut ainsi être comprise entre 10% et 50% et notamment entre 10% et 40%.

La teneur en oxyde de l'autre terre rare, ou de l'ensemble des autres terres rares est généralement d'au plus 30%, plus particulièrement d'au plus 20% et d'au moins 2%, de préférence d'au moins 5% et notamment d'au moins 10%. Elle peut être en particulier comprise entre 5% et 20%.

L'invention concerne aussi les compositions constituées essentiellement d'oxydes de zirconium, de cérium et d'au moins une terre rare autre que le cérium. On entend par là qu'elles peuvent comporter d'autres éléments sous forme de traces ou d'impuretés, comme l'hafnium notamment, mais qu'elles ne comportent pas d'autres éléments susceptibles notamment d'avoir une influence sur leur surface spécifique et/ou leurs propriétés de réductibilité.

Les compositions de l'invention ont pour caractéristique essentielle le fait de présenter une température maximale de réductibilité d'au plus 500°C. Cette température maximale de réductibilité peut être plus particulièrement d'au plus 480°C et encore plus particulièrement d'au plus 450°C. Cette température est généralement d'au moins 430°C et elle peut être ainsi comprise entre 430°C et 500°C et notamment entre 450°C et 480°C.

La réductibilité des compositions est déterminée par la mesure de leur capacité de captage de l'hydrogène en fonction de la température. On détermine ainsi par cette mesure une température maximale de réductibilité qui correspond à la température à laquelle le captage de l'hydrogène est maximal et où, en d'autres termes, la réduction du cérium IV en cérium III est aussi maximale. Les valeurs données ci-dessus sont mesurées, sauf indication contraire, sur des compositions ayant subi une calcination à 1000°C pendant 6 heures.

Les compositions de l'invention telles que décrites ci-dessus présentent aussi après calcination à 1100°C pendant 4 heures une température maximale de réductibilité qui est aussi d'au plus 500°C.

Les compositions de l'invention présentent aussi des caractéristiques particulières de surface spécifique. En effet, tout en présentant une température maximale de réductibilité réduite, elles offrent en outre des surfaces spécifiques élevées même à hautes températures.

Ainsi, elles peuvent présenter après calcination à 900°C, 6 heures une surface spécifique d'au moins 60 m²/g, plus particulièrement d'au moins 70 m²/g. Dans ces mêmes conditions de calcination des surfaces spécifiques jusqu'à une valeur d'environ 90 m²/g peuvent être obtenues.

Par ailleurs, elles présentent après calcination à 1000°C, 6 heures une surface spécifique d'au moins 45 m²/g, plus particulièrement d'au moins 50 m²/g et encore plus particulièrement d'au moins 55 m²/g. Dans ces mêmes conditions de calcination des surfaces spécifiques jusqu'à une valeur d'environ 65 m²/g peuvent être obtenues.

Une autre caractéristique intéressante des compositions de l'invention est qu'elles peuvent se présenter sous forme de particules désagglomérables. Ainsi, par un simple traitement par ultrasons, ces particules peuvent présenter une variation de leur diamètre moyen (d₅₀) après ce traitement d'au moins 30% et plus particulièrement d'au moins 50% cette variation étant exprimée par le rapport 100(d₅₀-d'₅₀)/d₅₀, d₅₀ et d'₅₀ désignant respectivement les diamètres avant et après traitement. A titre d'exemple seulement, les compositions de l'invention peuvent se présenter sous forme de particules dont le diamètre moyen (d'₅₀) après un tel traitement est d'au plus 10 µm, plus particulièrement d'au plus 8 µm et encore plus particulièrement d'au plus 6 µm.

Les valeurs de granulométrie données ici et pour le reste de la description sont mesurées au moyen d'un granulométre laser de type Coulter sur un échantillon de particules dispersées dans l'eau et soumis aux ultrasons (120 W) pendant 5 minutes. Les conditions plus précises de la mesure sont données dans les exemples en fin de description.

Les compositions de l'invention se présentent généralement sous la forme d'une solution solide pure de l'oxyde de cérium et de l'autre terre rare. On entend par là que le cérium et l'autre terre rare sont présents totalement en solution solide dans l'oxyde de zirconium. Les diagrammes en diffraction RX de ces compositions révèlent en particulier, au sein de ces dernières, l'existence d'une phase unique clairement identifiable et correspondant à celle d'un oxyde de zirconium cristallisé dans le système tétragonal, traduisant ainsi l'incorporation du cérium et de l'autre terre rare dans le réseau cristallin de l'oxyde de zirconium, et donc l'obtention d'une solution solide vraie. Il est à noter que les compositions de l'invention présentent cette caractéristique de solution solide même après calcination à température élevée, par exemple au moins 1000°C, 6 heures.

Le procédé de préparation des compositions de l'invention va maintenant être décrit.

Ce procédé est caractérisé en ce qu'il comprend les étapes suivantes :
- (a) on forme un mélange liquide comprenant des composés du zirconium, du cérium et de l'autre terre rare;
- (b) on fait réagir en continu dans un réacteur ledit mélange avec un composé basique, le temps de séjour dans le réacteur étant d'au plus 100 millisecondes, ce par quoi on obtient un précipité à la sortie du réacteur;
- (c) on chauffe en milieu aqueux ledit précipité, le milieu étant maintenu à un pH d'au moins 5;
- (d) on ajoute au précipité obtenu à l'étape précédente un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e) on calcine le précipité ainsi obtenu.

La première étape (a) du procédé consiste donc à préparer un mélange en milieu liquide des composés des éléments constitutifs de la composition, c'est à dire du zirconium, du cérium et de la terre rare supplémentaire.

Le mélange se fait généralement dans un milieu liquide qui est l'eau de préférence.

Les composés sont de préférence des composés solubles. Ce peut être notamment des sels de zirconium, de cérium et de terre rare. Ces composés peuvent être choisis parmi les nitrates, les sulfates, les acétates, les chlorures, le nitrate céri-ammoniacal.

A titre d'exemples, on peut ainsi citer le sulfate de zirconium, le nitrate de zirconyle ou le chlorure de zirconyle. Le nitrate de zirconyle est utilisé le plus généralement. On peut citer aussi notamment les sels de cérium IV tels que nitrates ou le nitrate céri-ammoniacal par exemple, qui conviennent ici particulièrement bien. De préférence, on utilise du nitrate cérique. Il est avantageux d'utiliser des sels de pureté d'au moins 99,5% et plus particulièrement d'au moins 99,9%. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également, de préférence, utiliser une solution de nitrate cérique obtenue selon le procédé d'oxydation électrolytique d'une solution de nitrate céreux tel que décrit dans le document FR-A- 2 570 087, et qui constitue ici une matière première intéressante.

On notera ici que les solutions aqueuses de sels de cérium et de sels de zirconyle peuvent présenter une certaine acidité libre initiale qui peut être ajustée par l'addition d'une base ou d'un acide. Il est cependant autant possible de mettre en oeuvre une solution initiale de sels de cérium et de zirconium présentant effectivement une certaine acidité libre comme mentionné ci-dessus, que des solutions qui auront été préalablement neutralisées de façon plus ou moins poussée. Cette neutralisation peut se faire par addition d'un composé basique au mélange précité de manière à limiter cette acidité. Ce composé basique peut être par exemple une solution d'ammoniaque ou encore d'hydroxydes d'alcalins (sodium, potassium,...), mais de préférence une solution d'ammoniaque.

On notera enfin que lorsque le mélange de départ contient du cérium sous forme III, il est préférable de faire intervenir dans le cours du procédé un agent oxydant, par exemple de l'eau oxygénée. Cet agent oxydant peut être utilisé en étant ajouté au milieu réactionnel lors de l'étape (a), lors de l'étape (b) ou encore au début de l'étape (c).

Le mélange peut être indifféremment obtenu soit à partir de composés initialement à l'état solide que l'on introduira par la suite dans un pied de cuve d'eau par exemple, soit encore directement à partir de solutions de ces composés puis mélange, dans un ordre quelconque, desdites solutions.

Dans la deuxième étape (b) du procédé, on met en présence ledit mélange avec un composé basique pour les faire réagir. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée. Le composé basique peut être plus particulièrement utilisé sous forme d'une solution.

La réaction entre le mélange de départ et le composé basique se fait en continu dans un réacteur. Cette réaction se fait donc en introduisant en continu les réactifs et en soutirant en continu aussi le produit de la réaction.

La réaction doit se faire dans des conditions telles que le temps de séjour du milieu réactionnel dans le réacteur est d'au plus 100 millisecondes, plus particulièrement d'au plus 50 millisecondes, de préférence d'au plus 20 millisecondes. Ce temps de séjour peut être d'au moins 5 millisecondes et il peut être par exemple compris entre 10 et 20 millisecondes.

Il peut être préférable de réaliser l'étape (b) en utilisant un excès stoechiométrique de composé basique pour s'assurer d'un rendement maximal de précipitation.

La réaction se fait de préférence sous forte agitation, par exemple dans des conditions telles que le milieu réactionnel est en régime turbulent.

La réaction se fait généralement à température ambiante.

On peut utiliser un réacteur de type mélangeur rapide.

Le mélangeur rapide peut être en particulier choisi parmi les mélangeurs (ou tubes) en T ou en Y symétriques, les mélangeurs (ou tubes) en T ou en Y asymétriques, les mélangeurs à jets tangentiels, les mélangeurs Hartridge-Roughton, les mélangeurs vortex, les mélangeurs rotor-stators.

Les mélangeurs (ou tubes) en T ou en Y symétriques sont généralement constitués de deux tubes opposés (tubes en T) ou formant un angle inférieur à 180° (tubes en Y), de même diamètre, déchargeant dans un tube central dont le diamètre est identique ou supérieur à celui des deux tubes précédents. Ils sont dits « symétriques » car les deux tubes d'injection des réactifs présentent le même diamètre et le même angle par rapport au tube central, le dispositif étant caractérisé par un axe de symétrie. De préférence, le tube central présente un diamètre deux fois plus élevés environ que le diamètre des tubes opposés ; de même la vitesse de fluide dans le tube central est de préférence égale à la moitié de celle dans les tubes opposés.

On préfère cependant employer, en particulier lorsque les deux fluides à introduire ne présentent pas le même débit, un mélangeur (ou tube) en T ou en Y asymétriques plutôt qu'un mélangeur (ou tube) en T ou en Y symétrique. Dans les dispositifs asymétriques, un des fluides (le fluide de plus faible débit en général) est injecté dans le tube central au moyen d'un tube latéral de diamètre plus faible. Ce dernier forme avec le tube central un angle de 90° en général (tube en T); cet angle peut être différent de 90° (tube en Y), donnant des systèmes à co-courant (par exemple angle de 45°) ou à contre-courant (par exemple angle de 135°) par rapport à l'autre courant.

De manière avantageuse, on utilise dans le procédé selon la présente invention un mélangeur à jets tangentiels, par exemple un mélangeur Hartridge-Roughton.

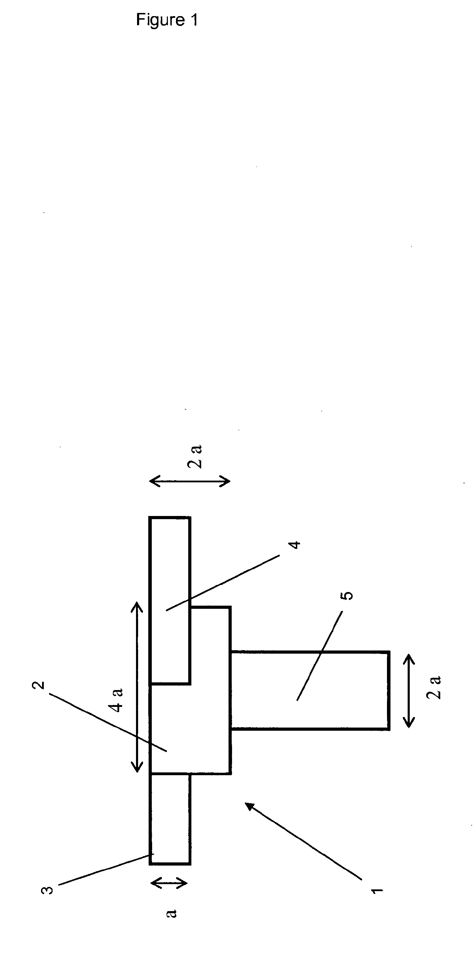

La figure 1 est un schéma qui représente un mélangeur de ce type. Ce mélangeur 1 comprend une chambre 2 ayant au moins deux admissions tangentielles 3 et 4 par lesquelles entrent séparément (mais en même temps) les réactifs, c'est-à-dire ici le mélange formé à l'étape (a) et le composé basique, ainsi qu'une sortie axiale 5 par laquelle sort le milieu réactionnel et ce, de préférence, vers un(e) réacteur (cuve) disposé(e) en série après ledit mélangeur. Les deux admissions tangentielles sont de préférence situées symétriquement et de manière opposée par rapport à l'axe central de la chambre 2.

La chambre 2 du mélangeur à jets tangentiels, Hartridge-Roughton utilisé présente généralement une section circulaire et est de préférence de forme cylindrique.

Chaque tube d'admission tangentielle peut présenter une hauteur interne (a) en section de 0,5 à 80 mm.

Cette hauteur interne (a) peut être comprise entre 0,5 et 10 mm, en particulier entre 1 et 9 mm, par exemple entre 2 et 7 mm. Cependant, notamment à l'échelle industrielle, elle est de préférence comprise entre 10 et 80 mm, en particulier entre 20 et 60 mm, par exemple entre 30 et 50 mm.

Le diamètre interne de la chambre 2 du mélangeur à jets tangentiels, Hartridge-Roughton employé peut être compris entre 3a et 6a, en particulier entre 3a et 5a, par exemple égal à 4a; le diamètre interne du tube de sortie axiale 5 peut être compris entre 1a et 3a, en particulier entre 1,5a et 2,5a, par exemple égal à 2a.

La hauteur de la chambre 2 du mélangeur peut être comprise entre 1a et 3a en particulier entre 1,5 et 2,5a, par exemple égal à 2a.

La réaction conduite à l'étape (b) du procédé conduit à la formation d'un précipité qui est évacué du réacteur et récupéré pour la mise en oeuvre de l'étape (c).

Cette étape (c) est une étape de chauffage du précipité en milieu aqueux.

Ce chauffage peut être réalisé directement sur le milieu réactionnel obtenu après réaction avec le composé basique ou sur une suspension obtenue après séparation du précipité du milieu réactionnel, lavage éventuel et remise dans l'eau du précipité. La température à laquelle est chauffé le milieu est d'au moins 100°C et encore plus particulièrement d'au moins 130°C. Elle peut être comprise entre 100°C et 200°C. L'opération de chauffage peut être conduite en introduisant le milieu liquide dans une enceinte close (réacteur fermé du type autoclave). Dans les conditions de températures données ci-dessus, et en milieu aqueux, on peut préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du chauffage peut varier dans de larges limites, par exemple entre 1 minute et 2 heures, ces valeurs étant données à titre tout à fait indicatif.

Le milieu soumis au chauffage présente un pH d'au moins 5. De préférence, ce pH est basique, c'est à dire qu'il est supérieur à 7 et, plus particulièrement, d'au moins 8.

Il est possible de faire plusieurs chauffages. Ainsi, on peut remettre en suspension dans l'eau, le précipité obtenu après l'étape de chauffage et éventuellement un lavage puis effectuer un autre chauffage du milieu ainsi obtenu. Cet autre chauffage se fait dans les mêmes conditions que celles qui ont été décrites pour le premier.

L'étape suivante du procédé peut se faire selon deux variantes.

Selon une première variante, on ajoute au milieu réactionnel issu de l'étape précédente un additif qui est choisi parmi les tensioactifs anioniques, les tensioactifs non ioniques, les polyéthylène-glycols, les acides carboxyliques et leurs sels et les tensioactifs du type éthoxylats d'alcools gras carboxyméthylés En ce qui concerne cet additif on pourra se référer à l'enseignement de la demande WO-98/45212 et utiliser les tensioactifs décrits dans ce document.

On peut mentionner comme tensioactifs du type anionique les éthoxycarboxylates, les acides gras éthoxylés ou propoxylés, notamment ceux de la marque ALKAMULS^{®}, les sarcosinates de formule R-C(O)N(CH₃)CH₂COO⁻, les bétaïnes de formule RR'NH-CH₃-COO⁻, R et R' étant des groupes alkyles ou alkylaryles, les esters phosphates, notamment ceux de la marque RHODAFAC^{®}, les sulfates comme les sulfates d'alcool, les sulfates d'éther alcool et les éthoxylats d'alcanolamide sulfatés, les sulfonates comme les sulfosuccinates, les alkyl benzène ou alkyl naphtalène sulfonates.

Comme tensioactif non ionique on peut mentionner les tensioactifs acétyléniques, les alcools gras éthoxylés ou propoxylés, par exemple ceux des marques RHODASURF^{®} ou ANTAROX^{®}, les alcanolamides, les oxydes d'amine, les alcanolamides éthoxylés, les amines éthoxylées ou propoxylées à longues chaînes, par exemple ceux de la marque RHODAMEEN^{®}, les copolymères oxyde d'éthylène/oxide de propylène, les dérivés du sorbitan, l'éthylène glycol, le propylène glycol, le glycérol, les esters polyglyceryle et leurs dérivés éthoxylés, les alkylamines, les alkylimidazolines, les huiles éthoxylées et les alkylphénols éthoxylés ou propoxylés, notamment ceux de la marque IGEPAL^{®}. On peut citer aussi en particulier les produits cités dans WO-98/45212 sous les marques IGEPAL^{®}, DOWANOL^{®}, RHODAMOX^{®} et ALKAMIDE^{®}.

En ce qui concerne les acides carboxyliques, on peut utiliser notamment les acides mono- ou dicarboxyliques aliphatiques et parmi ceux-ci plus particulièrement les acides saturés. On peut utiliser aussi des acides gras et plus particulièrement les acides gras saturés. On peut citer ainsi notamment les acides formique, acétique, proprionique, butyrique, isobutyrique, valérique, caproïque, caprylique, caprique, laurique, myristique, palmitique, stéarique, hydroxystéarique, éthyl-2-hexanoïque et béhénique. Comme acides dicarboxyliques, on peut mentionner les acides oxalique, malonique, succinique, glutarique, adipique, pimélique, subérique, azélaïque et sébacique.

Les sels des acides carboxyliques peuvent aussi être utilisés, notamment les sels ammoniacaux.

A titre d'exemple, on peut citer plus particulièrement l'acide laurique et le laurate d'ammonium.

Enfin, il est possible d'utiliser un tensioactif qui est choisi parmi ceux du type éthoxylats d'alcools gras carboxyméthylés.

Par produit du type éthoxylats d'alcool gras carboxyméthylés on entend les produits constitués d'alcools gras éthoxylés ou propoxylés comportant en bout de chaîne un groupement CH₂-COOH.

Ces produits peuvent répondre à la formule :

R₁-O-(CR₂R₃-CR₄R₅-O)ₙ-CH₂-COOH

dans laquelle R₁ désigne une chaîne carbonée, saturée ou insaturée, dont la longueur est généralement d'au plus 22 atomes de carbone, de préférence d'au moins 12 atomes de carbone; R₂, R₃, R₄ et R₅ peuvent être identiques et représenter l'hydrogène ou encore R₂ peut représenter un groupe CH₃ et R₃, R₄ et R₅ représentent l'hydrogène; n est un nombre entier non nul pouvant aller jusqu'à 50 et plus particulièrement compris entre 5 et 15, ces valeurs étant incluses. On notera qu'un tensio-actif peut être constitué d'un mélange de produits de la formule ci-dessus pour lesquels R₁ peut être saturé et insaturé respectivement ou encore des produits comportant à la fois des groupements -CH₂-CH₂-O- et -C(CH₃)-CH₂-O-.

Une autre variante consiste à séparer d'abord le précipité issu de l'étape (c) puis à ajouter l'additif tensioactif à ce précipité.

La quantité de tensio-actif utilisée, exprimée en pourcentage en poids d'additif par rapport au poids de la composition calculé en oxyde, est généralement comprise entre 5% et 100% plus particulièrement entre 15% et 60%.

Après l'addition du tensio-actif, on maintient le mélange obtenu de préférence sous agitation pendant une durée qui peut être d'environ une heure. On sépare ensuite éventuellement le précipité du milieu liquide par tout moyen connu.

Le précipité séparé peut éventuellement être lavé, notamment par de l'eau ammoniaquée.

Dans une dernière étape du procédé selon l'invention, le précipité récupéré est ensuite calciné. Cette calcination permet de développer la cristallinité du produit formé et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 300 et 900°C.

Le produit issu de la calcination se présente sous la forme d'une poudre et, si nécessaire, il peut être désaggloméré ou broyé en fonction de la taille souhaitée pour les particules constituant cette poudre.

Les compositions de l'invention peuvent aussi éventuellement être mises en forme pour se présenter sous forme de granulés, billes, cylindres ou nids d'abeille de dimensions variables.

Les compositions de l'invention peuvent être utilisées comme catalyseurs ou supports de catalyseur. Ainsi, l'invention concerne aussi des systèmes catalytiques comprenant les compositions de l'invention. Pour de tels systèmes, ces compositions peuvent ainsi être appliquées sur tout support utilisé habituellement dans le domaine de la catalyse, c'est à dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques comprenant un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisable dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre. Les systèmes catalytiques et les compositions de l'invention peuvent enfin être utilisés comme pièges à NOx.

Dans le cas de ces utilisations en catalyse, les compositions de l'invention sont employées généralement en combinaison avec des métaux précieux, elles jouent ainsi le rôle de support pour ces métaux. La nature de ces métaux et les techniques d'incorporation de ceux-ci dans les compositions supports sont bien connues de l'homme du métier. Par exemple, les métaux peuvent être le platine, le rhodium, le palladium ou l'iridium, ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante. De ce fait, l'invention concerne aussi un procédé de traitement des gaz d'échappement des moteurs à combustion interne qui est caractérisé en ce qu'on utilise à titre de catalyseur un système catalytique tel que décrit ci-dessus ou une composition selon l'invention et telle que décrite précédemment.

Des exemples vont maintenant être donnés.

Dans ces exemples, la mesure de réductibilité est faite par réduction programmée en température de la manière suivante. On utilise un appareil MI-100 Altamira avec un réacteur en silice et un échantillon de 200 mg qui a été préalablement calciné, suivant les cas, 6 heures à 1000°C sous air ou 4 heures à 1100°C sous air. Le gaz est l'hydrogène à 10% en volume dans l'argon et avec un débit de 30 ml/mn. La montée en température se fait de l'ambiante à 900°C à raison de 10°C/mn. La détection du signal se fait avec un détecteur de conductivité thermique à 70 mA. Le captage de l'hydrogène est calculé à partir de la surface manquante du signal d'hydrogène de la ligne de base à la température ambiante à la ligne de base à 900°C. La température est mesurée à l'aide d'un thermocouple placé au coeur de l'échantillon et de la courbe obtenue on déduit la température maximale de réductibilité telle que définie plus haut.

### EXEMPLE 1

Cet exemple concerne une composition à 50% de zirconium, 40% de cérium, 5% de lanthane et 5% d'yttrium, ces proportions étant exprimées en pourcentages massiques des oxydes ZrO₂, CeO2, La₂O₃ et Y₂O₃.

Dans un bécher agité, on introduit la quantité nécessaire de nitrate de zirconium, de nitrate de cérium, de nitrate de lanthane et de nitrate d'yttrium. On complète ensuite avec de l'eau distillée de façon à obtenir 1 litre d'une solution de nitrates à 120 g/l.

Dans un autre bécher agité, on introduit une solution d'ammoniaque (12 mol/l) et on complète ensuite avec de l'eau distillée de façon à obtenir un volume total de 1 litre et un excès stoechiométrique en ammoniaque de 20% par rapport aux cations à précipiter.

On maintient sous agitation constante les deux solutions préparées précédemment et on les introduit en continu dans un mélangeur rapide Hartridge-Roughton du type de celui de la figure 1 et de hauteur d'entrée (a) de 2 mm. Le pH en sortie du mélangeur est de 9,5. Le débit de chacun des réactifs est de 30 l/h et le temps de séjour de 12 ms.

La suspension de précipité ainsi obtenue est placée dans un autoclave en acier inoxydable équipé d'un mobile d'agitation. La température du milieu est portée à 125°C pendant 1 heure sous agitation.

On ajoute à la suspension ainsi obtenue 33 grammes d'acide laurique. La suspension est maintenue sous agitation pendant 1 heure.

La suspension est alors filtrée sur Büchner, puis on lave le précipité filtré à l'eau ammoniaquée. Le produit obtenu est ensuite porté à 700°C pendant 4 heures en palier.

### EXEMPLE 2 COMPARATIF

Cet exemple concerne la même composition que celle de l'exemple 1.

On part des mêmes réactifs et on prépare 1 litre d'une solution de nitrates de zirconium, de cérium, de lanthane et d'yttrium.

Dans un réacteur agité, on introduit une solution d'ammoniaque (12 mol/l) et on complète ensuite avec de l'eau distillée de façon à obtenir un volume total de 1 litre et un excès stoechiométrique en ammoniaque de 20% par rapport aux nitrates à précipiter.

La solution de nitrates est introduite dans le réacteur sous agitation constante en 1 heure. On procède ensuite après la précipitation de la même manière que dans l'exemple 1.

### EXEMPLE 3

Cet exemple concerne la même composition que celle de l'exemple 1 qui est préparée dans les mêmes conditions avec comme seule différence le fait que la solution d'ammoniaque de départ est préparée de manière à présenter un excès stoechiométrique en ammoniaque de 5% par rapport aux cations à précipiter.

### EXEMPLE 4

Cet exemple concerne une composition à 72% de zirconium, 21% de cérium, 2% de lanthane et 5% de néodyme, ces proportions étant exprimées en pourcentages massiques des oxydes ZrO₂, CeO₂, La₂O₃ et Nd₂O₃.

Dans un bécher agité, on introduit la quantité nécessaire de nitrate de zirconium, de nitrate de cérium, de nitrate de lanthane et de nitrate de néodyme. On complète ensuite avec de l'eau distillée de façon à obtenir 1 litre d'une solution de nitrates à 120 g/l.

Dans un autre bécher agité, on introduit une solution d'ammoniaque (12 mol/l) et on complète ensuite avec de l'eau distillée de façon à obtenir un volume total de 1 litre et un excès stoechiométrique en ammoniaque de 20% par rapport aux cations à précipiter.

On maintient sous agitation constante les deux solutions préparées précédemment et on les introduit en continu dans un mélangeur rapide Hartridge-Roughton du type de celui de la figure 1 et de hauteur d'entrée (a) de 2 mm. Le pH en sortie du mélangeur est de 9,6. Le débit de chacun des réactifs est de 50 l/h et le temps de séjour de 7 ms.

La suspension de précipité ainsi obtenue est placée dans un autoclave en acier inoxydable équipé d'un mobile d'agitation. La température du milieu est portée à 150°C pendant 1 heure 30 minutes sous agitation.

On ajoute à la suspension ainsi obtenue 40 grammes d'acide laurique. La suspension est maintenue sous agitation pendant 1 heure.

La suspension est alors filtrée sur Büchner, puis on lave le précipité filtré à l'eau ammoniaquée.

Le produit obtenu est ensuite porté à 700°C pendant 4 heures en palier.

### EXEMPLE 5 COMPARATIF

Cet exemple concerne la même composition que celle de l'exemple 4.

On part des mêmes réactifs et on prépare 1 litre d'une solution de nitrates de zirconium, de cérium, de lanthane et de néodyme.

Dans un réacteur agité, on introduit une solution d'ammoniaque (12 mol/l) et on complète ensuite avec de l'eau distillée de façon à obtenir un volume total de 1 litre et un excès stoechiométrique en ammoniaque de 20% par rapport aux nitrates à précipiter.

La solution de nitrates est introduite dans le réacteur sous agitation constante en 1 heure.

On procède ensuite après la précipitation de la même manière que dans l'exemple 4.

On donne dans le tableau 1 ci-dessous, les caractéristiques des produits obtenus dans les exemples.

**Tableau 1**

| | Surface spécifique (m²/g) après calcination 6 heures à | | Température maximale de réductibilité | |
|---|---|---|---|---|
| Exemple | 900°C | 1000°C | 1000°C⁽¹⁾ | 1100°C⁽¹⁾ |
| 1 | 78 | 57 | 469°C | 453°C |
| 2 comparatif | 69 | 50 | 580°C | 555°C |
| 3 | 82 | 60 | 450°C | 455°C |
| 4 | 78 | 55 | 480°C | 417°C |
| 5 comparatif | 65 | 50 | 564°C | 560°C |

| | | | | |
|---|---|---|---|---|
| (1) cette température est celle à laquelle a été préalablement soumise la composition avant la mesure de réductibilité. | | | | |

Il est à noter que les produits des exemples 1 et 5 se présentent sous la forme d'une solution solide après calcination 6 heures à 900°C ou à 1000°C.

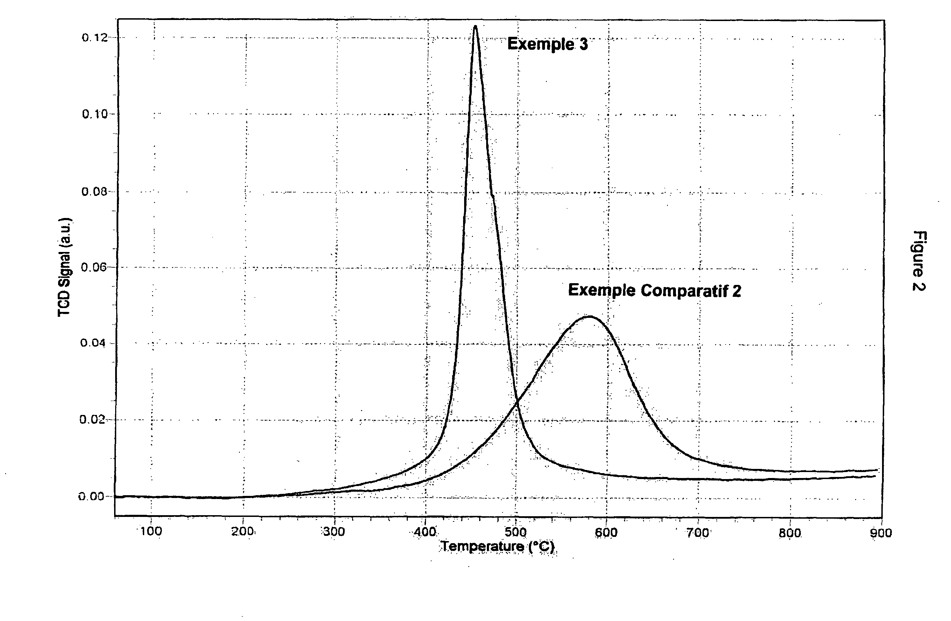

La figure 2 donne les courbes obtenues en mettant en oeuvre la mesure de réductibilité décrite plus haut. La température figure en abscisse et la valeur du signal mesuré est donnée en ordonnée. La température maximale de réductibilité est celle qui correspond à la hauteur maximale du pic de la courbe. La figure donne les courbes obtenues pour les compositions des exemples 2 comparatif et 3.

On donne dans le tableau 2 ci-dessous, les caractéristiques de granulométrie des produits des exemples.

Les mesures de granulométrie sont faites dans les conditions suivantes.
Appareil : Granulomètre Laser LS13-320 Beckman Coulter (granulométrie par diffraction Laser)
Modèle Optique Fraunhofer avec PIDS (Différence de diffusion des intensités polarisées)

Echantillon : une masse de 0,5 g de produit est mis en suspension dans une cuve à ultra-sons (AEROSEC Delta 011 CT) et dans un volume de 80 ml d'une solution à 1g/l d'hexaméthylphosphate (HMP).

On désagglomère la suspension en faisant fonctionner la cuve pendant 5 mn à 120 Watts.

Mesures : deux mesures sont réalisées à partir de la suspension sans et avec traitement par ultra-son.

Pour ces mesures on prélève un échantillon de suspension de la cuve à ultra-sons et on l'introduit dans le granulomètre en le maintenant sous agitation magnétique.

La mesure est faite avec les conditions suivantes : Obscuration <10% PIDS 50%.

**Tableau 2**

| | D₅₀ (µm) | |
|---|---|---|
| Exemple | Produit initial | Produit après traitement |
| 1 | 14 | 6 |
| 2 comparatif | 13,3 | 11,6 |

Le produit initial est le produit tel qu'obtenu à la fin du procédé décrit dans les exemples c'est-à-dire après la calcination à 700°C.

Le produit après traitement est le produit issu du traitement par ultrasons du produit initial.

Le produit de l'exemple comparatif n'est pratiquement pas désagglomérable contrairement à celui de l'exemple 1 selon l'invention.

## Revendications

1. Composition à base d'oxydes de zirconium, de cérium et d'au moins une terre rare autre que le cérium, ayant une teneur en oxyde de cérium d'au plus 50% en masse, **caractérisée en ce qu'**elle présente après calcination à 1000°C, 6 heures, une température maximale de réductibilité d'au plus 500°C et une surface spécifique d'au moins 45 m²/g.

2. Composition selon la revendication 1, **caractérisée en ce qu'**elle présente après calcination à 1000°C, 6 heures une température maximale de réductibilité d'au plus 480°C.

3. Composition selon la revendication 1, **caractérisée en ce qu'**elle présente après calcination à 1000°C, 6 heures une température maximale de réductibilité d'au plus 450°C.

4. Composition selon l'une des revendications précédentes, **caractérisée en ce qu'**elle présente après calcination à 1000°C, 6 heures une surface spécifique d'au moins 50 m²/g, plus particulièrement d'au moins 55 m²/g.

5. Composition selon l'une des revendications précédentes, **caractérisée en ce qu'**elle présente une teneur en oxyde de cérium comprise entre 10 et 50%.

6. Composition selon l'une des revendications précédentes, **caractérisée en ce qu'**elle présente une teneur en oxyde de l'autre terre rare d'au plus 30%, plus particulièrement d'au plus 20%.

7. Composition selon l'une des revendications précédentes, **caractérisée en ce que** la terre rare est choisie dans le groupe comprenant l'yttrium, le lanthane, le néodyme, le praséodyme et le gadolinium.

8. Composition selon l'une des revendications précédentes, **caractérisée en ce qu'**elle présente après calcination à 900°C, 6 heures une surface spécifique d'au moins 60 m²/g, plus particulièrement d'au moins 70 m²/g.

9. Composition selon l'une des revendications précédentes, **caractérisée en ce qu'**elle est désagglomérable par un traitement par ultra-sons et **en ce qu'**elle présente après ce traitement une variation du diamètre moyen (d₅₀) des particules qui la constituent d'au moins 30% et plus particulièrement d'au moins 50%.

10. Composition selon l'une des revendications précédentes, **caractérisée en ce qu'**elle présente après calcination à 1100°C, 4 heures une température maximale de réductibilité d'au plus 500°C.

11. Procédé de préparation d'une composition selon l'une des revendications précédentes, **caractérisé en ce qu'**il comprend les étapes suivantes :
- (a) on forme un mélange liquide comprenant des composés du zirconium, du cérium et de l'autre terre rare;
- (b) on fait réagir en continu dans un réacteur ledit mélange avec un composé basique, le temps de séjour dans le réacteur étant d'au plus 100 millisecondes, ce par quoi on obtient un précipité à la sortie du réacteur;
- (c) on chauffe en milieu aqueux ledit précipité, le milieu étant maintenu à un pH d'au moins 5;
- (d) on ajoute au précipité obtenu à l'étape précédente un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e) on calcine le précipité ainsi obtenu.

12. Procédé selon la revendication 11, **caractérisé en ce qu'**on utilise comme composés du zirconium, du cérium et de l'autre terre rare un composé choisi parmi les nitrates, les sulfates, les acétates, les chlorures, le nitrate cériammoniacal.

13. Procédé selon la revendication 11 ou 12, **caractérisé en ce que** le chauffage du précipité de l'étape (c) est réalisé à une température d'au moins 100°C.

14. Procédé selon l'une des revendications 11 à 13, **caractérisé en ce que** le temps de séjour dans le réacteur est d'au plus 20 millisecondes.

15. Système catalytique, **caractérisé en ce qu'**il comprend une composition selon l'une des revendications 1 à 10.

16. Procédé de traitement des gaz d'échappement des moteurs à combustion interne, **caractérisé en ce qu'**on utilise à titre de catalyseur un système catalytique selon la revendication 15 ou une composition selon l'une des revendications 1 à 10.

## Patentansprüche

1. Zusammensetzung auf Basis von Oxiden von Zirconium, Cer und mindestens einem von Cer verschiedenen Seltenerdmetall mit einem Ceroxidgehalt von höchstens 50 Gew.-%, **dadurch gekennzeichnet, dass** sie nach Calcinierung bei 1000°C über einen Zeitraum von 6 Stunden eine maximale Reduzierbarkeitstemperatur von höchstens 500°C und eine spezifische Oberfläche von mindestens 45 m²/g aufweist.

2. Zusammensetzung nach Anspruch 1, **dadurch gekennzeichnet, dass** sie nach Calcinierung bei 1000°C über einen Zeitraum von 6 Stunden eine maximale Reduzierbarkeitstemperatur von höchstens 480°C aufweist.

3. Zusammensetzung nach Anspruch 1, **dadurch gekennzeichnet, dass** sie nach Calcinierung bei 1000°C über einen Zeitraum von 6 Stunden eine maximale Reduzierbarkeitstemperatur von höchstens 450°C aufweist.

4. Zusammensetzung nach Anspruch 1, **dadurch gekennzeichnet, dass** sie nach Calcinierung bei 1000°C über einen Zeitraum von 6 Stunden eine spezifische Oberfläche von mindestens 50 m²/g und spezieller mindestens 55 m²/g aufweist.

5. Zusammensetzung nach einem der vorhergehenden Ansprüche, **dadurch gekennzeichnet, dass** sie einen Ceroxidgehalt zwischen 10 und 50 Gew.-% aufweist.

6. Zusammensetzung nach einem der vorhergehenden Ansprüche, **dadurch gekennzeichnet, dass** sie einen Gehalt an Oxid des anderen Seltenerdmetalls von höchstens 30% und spezieller höchstens 20% aufweist.

7. Zusammensetzung nach einem der vorhergehenden Ansprüche, **dadurch gekennzeichnet, dass** das Seltenerdmetall aus der Gruppe umfassend Yttrium, Lanthan, Neodym, Praseodym und Gadolinium ausgewählt ist.

8. Zusammensetzung nach einem der vorhergehenden Ansprüche, **dadurch gekennzeichnet, dass** sie nach Calcinierung bei 900°C über einen Zeitraum von 6 Stunden eine spezifische Oberfläche von mindestens 60 m²/g und spezieller mindestens 70 m²/g aufweist.

9. Zusammensetzung nach einem der vorhergehenden Ansprüche, **dadurch gekennzeichnet, dass** sie durch eine Ultraschallbehandlung entagglomerierbar ist und dass sie nach dieser Behandlung eine Variation des mittleren Durchmessers (d₅₀) der Teilchen, aus denen sie besteht, von mindestens 30% und spezieller mindestens 50% aufweist.

10. Zusammensetzung nach einem der vorhergehenden Ansprüche, **dadurch gekennzeichnet, dass** sie nach Calcinierung bei 1100°C über einen Zeitraum von 4 Stunden eine maximale Reduzierbarkeitstemperatur von höchstens 500°C aufweist.

11. Verfahren zur Herstellung einer Zusammensetzung nach einem der vorhergehenden Ansprüche, **dadurch gekennzeichnet, dass** es die folgenden Schritte umfasst:
- (a) man bildet eine flüssige Mischung, die Verbindungen von Zirconium, Cer und dem anderen Seltenerdmetall umfasst;
- (b) man setzt die Mischung in einem Reaktor kontinuierlich mit einer basischen Verbindung um, wobei die Verweilzeit in dem Reaktor höchstens 100 Millisekunden beträgt, wodurch man am Ausgang des Reaktors einen Niederschlag enthält;
- (c) man erhitzt den Niederschlag in wässrigem Medium, wobei das Medium bei einem pH-Wert von mindestens 5 gehalten wird;
- (d) man versetzt den im vorhergehenden Schritt erhaltenen Niederschlag mit einem aus anionischen Tensiden, nichtionischen Tensiden, Polyethylenglykolen, Carbonsäuren und Salzen davon und Tensiden vom Carboxymethylfettalkoholethoxylat-Typ ausgewählten Additiv;
- (e) man calciniert den so erhaltenen Niederschlag.

12. Verfahren nach Anspruch 11, **dadurch gekennzeichnet, dass** man als Verbindungen von Zirconium, Cer und dem anderen Seltenerdmetall eine aus Nitraten, Sulfaten, Acetaten, Chloriden und Cer(IV)-ammoniumnitrat ausgewählte Verbindung verwendet.

13. Verfahren nach Anspruch 11 oder 12, **dadurch gekennzeichnet, dass** man den Niederschlag in Schritt (c) auf eine Temperatur von mindestens 100°C erhitzt.

14. Verfahren nach einem der Ansprüche 11 bis 13, **dadurch gekennzeichnet, dass** die Verweilzeit in dem Reaktor höchstens 20 Millisekunden beträgt.

15. Katalytisches System, **dadurch gekennzeichnet, dass** es eine Zusammensetzung nach einem der Ansprüche 1 bis 10 umfasst.

16. Verfahren zur Behandlung der Abgase von Verbrennungsmotoren, **dadurch gekennzeichnet, dass** man als Katalysator ein katalytisches System nach Anspruch 15 oder eine Zusammensetzung nach einem der Ansprüche 1 bis 10 verwendet.

## Claims

1. Composition containing oxides of zirconium, cerium and at least one rare earth other than cerium, having a cerium oxide content of at most 50% by mass, **characterized in that** after calcination at 1000°C for 6 hours, it has a maximum reducibility temperature of at most 500°C and a specific surface area of at least 45 m²/g.

2. Composition according to Claim 1, **characterized in that** after calcination at 1000°C for 6 hours, it has a maximum reducibility temperature of at most 480°C.

3. Composition according to Claim 1, **characterized in that** after calcination at 1000°C for 6 hours, it has a maximum reducibility temperature of at most 450°C.

4. Composition according to one of the preceding claims, **characterized in that** after calcination at 1000°C for 6 hours it has a specific surface area of at least 50 m²/g, more particularly of at least 55 m²/g.

5. Composition according to one of the preceding claims, **characterized in that** it has a cerium oxide content of between 10 and 50%.

6. Composition according to one of the preceding claims, **characterized in that** it has a content of the other rare earth oxide of at most 30%, more particularly of at most 20%.

7. Composition according to one of the preceding claims, **characterized in that** the rare earth is selected from the group comprising yttrium, lanthanum, neodymium, praseodymium and gadolinium.

8. Composition according to one of the preceding claims, **characterized in that** after calcination at 900°C for 6 hours it has a specific surface area of at least 60 m²/g, more particularly of at least 70 m²/g.

9. Composition according to one of the preceding claims, **characterized in that** it can be deagglomerated by a sonication treatment and **in that** after this treatment the particles that constitute it have a median diameter (d₅₀) variation of at least 30% and more particularly of at least 50%.

10. Composition according to one of the preceding claims, **characterized in that** after calcination at 1100°C for 4 hours, it has a maximum reducibility temperature of at most 500°C.

11. Process of preparing a composition according to one of the preceding claims, **characterized in that** it comprises the following steps:
- (a) a liquid mixture comprising compounds of zirconium, cerium and the other rare earth is formed;
- (b) said mixture is reacted in a continuous process in a reactor with a basic compound, the residence time in the reactor being at most 100 milliseconds, and from which a precipitate is obtained when it leaves the reactor;
- (c) said precipitate is heated in an aqueous medium, the medium being held at a pH of at least 5;
- (d) an additive is added to the precipitate obtained in the previous step, selected from among anionic surfactants, nonionic surfactants, polyethylene glycols, carboxylic acids and salts thereof, and surfactants of the carboxymethyl fatty acid ethoxylate type;
- (e) the resulting precipitate is calcinated.

12. Process according to Claim 11, **characterized in that** as zirconium, cerium and the other rare earth compounds, a compound selected from among nitrates, sulfates, acetates, chlorides, ceric ammonium nitrate is used.

13. Process according to Claim 11 or 12, **characterized in that** the precipitate is heated in step (c) at a temperature of at least 100 °C.

14. Process according to one of Claims 11 to 13, **characterized in that** the residence time in the reactor is at most 20 milliseconds.

15. Catalytic system, **characterized in that** it comprises a composition according to one of Claims 1 to 10.

16. Process for treating exhaust gases from internal combustion engines, **characterized in that** as catalyst a catalytic system according to Claim 15 or a composition according to one of Claims 1 to 10 is used.
